# EUROPÄISCHE PATENTSCHRIFT

(11) **EP 3 832 008 B1**
(45) Veröffentlichungstag und Bekanntmachung des Hinweises auf die Patenterteilung: **08.11.2023**
(21) Anmeldenummer: 20211097.9
(22) Anmeldetag: 01.12.2020
(51) Int. Cl.: D06F 67/04, D06F 95/00

(54) **VORRICHTUNG ZUM ZUFÜHREN VON WÄSCHESTÜCKEN ZU EINER WÄSCHEBEHANDLUNGSEINRICHTUNG**
DEVICE FOR FEEDING LAUNDRY PIECES TO A LAUNDRY TREATMENT INSTALLATION
DISPOSITIF POUR AMENER DES PIÈCES DE LINGE À UN APPAREIL DE TRAITEMENT DU LINGE

(30) Priorität: 04.12.2019 DE 102019008417
(43) Veröffentlichungstag der Anmeldung: 09.06.2021
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE)
(74) Vertreter: Möller, Friedrich

(56) Entgegenhaltungen:
- EP-A1- 0 161 716
- EP-A2- 0 068 672
- WO-A1-2006/125656
- DE-A1-102014 014 510
- DE-U1- 7 739 858
- DE-U1- 8 813 291
- DE-U1- 20 009 588

## Beschreibung

Die Erfindung betrifft eine Vorrichtung zum Zuführen von Wäschestücken zu einer Wäschebehandlungseinrichtung gemäß dem Oberbegriff des Anspruchs 1.

Die hier angesprochenen Vorrichtungen, die im Fachjargon auch als "Eingabemaschinen" bezeichnet werden, dienen dazu, ausgebreitete Wäschestücke einer Wäschebehandlungseinrichtung zuzuführen. Bei der Wäschebehandlungseinrichtung handelt es sich bevorzugt um Mangeln, und zwar Mangeln jeglicher Art, wie zum Beispiel Muldenmangeln und Bändermangeln. Sofern nicht kleinere Wäschestücke, beispielsweise Servietten, manuell ausgebreitet werden, dienen Eingabemaschinen auch dazu, die Wäschestücke, insbesondere größere Wäschestücke, auszubreiten und im ausgebreiteten Zustand auf einen Zuführförderer der Eingabemaschine aufzulegen. Dann werden die Wäschestücke entweder manuell in Spreizklammern der Spreizeinrichtung eingehängt oder automatisch in die Spreizklammern eingegeben.

Vor allem bei Mangeln ist es wichtig, dass die Wäschestücke so ausgebreitet bzw. ausgestreckt auf den Zuführförderer liegen, dass ihr quer zur Zuführrichtung verlaufender und in Zuführrichtung voraneilender Rand möglichst geradlinig verläuft und der Rand, insbesondere bei gesäumten Wäschestücken, nicht umgeschlagen bzw. zurückgeschlagen ist. Im Übrigen müssen die Wäschestücke nahezu faltenfrei ausgebreitet auf dem Zuführförderer liegen. Ansonsten lassen sich die Wäschestücke nicht mit der geforderten Qualität mangeln.

Aus der DE 200 09 588 U1 ist eine Vorrichtung zum Zuführen von Wäschestücken zu einer Mangel oder dergleichen bekannt. Die Vorrichtung verfügt über einen Zuführförderer und einen in Zuführrichtung der Wäschestücke zur Mangel oder dergleichen folgenden Streckförderer aus zwei übereinander angeordneten Gurtförderern. Durch mindestens eine kurzfristige Geschwindigkeitsdifferenz zwischen dem Gurtförderer und dem Streckförderer wird ein eventuell umgeschlagener vorderer Randbereich des Wäschestücks zwischen den den Streckförderer bildenden Gurtförderern ausgestreift.

Die DE 77 39 858 U1 offenbart eine Spreizvorrichtung, womit Mangelwäsche vor einer Bügelmaschine ausgebreitet wird. Die Spreizvorrichtung weist übereinanderliegende Gurtförderer auf. Ein oberer Gurtförderer verfügt über eine etwas höhere Geschwindigkeit als ein unterer Gurtförderer. Dadurch wird das Spreizen der Mangelwäsche quer zur Zuführrichtung beim Zuführen derselben zur Bügelmaschine unterstützt.

Die DE 88 13 291 U1 betrifft eine Vorrichtung zum Zuführen von Wäschestücken zu einer Mangel oder dergleichen mit einem auf einen Zuführförderer folgenden Streckförderer aus übereinanderliegenden Gurtförderern. Bei dieser bekannten Vorrichtung ist es vorgesehen, nach dem Einlaufen eines vorderen Rands des Wäschestücks in den Streckförderer den vor demselben angeordneten Zuführförderer kurzzeitig abzubremsen, um dadurch einen eventuell umgeschlagenen vorderen Rand des Wäschestücks im Streckförderer auszustreifen.

Die DE 10 2014 014 510 A1 offenbart eine Mangel mit einem Mangelband, dessen mit Wäschestücken in Kontakt kommende Seite der Außenfläche eine Strukturierung aufweist, die als Mitnahme bzw. Haftfläche für die vom Mangelband durch die Mangel zu transportierenden Wäschestücke dient.

EP 0 068 672 A2 offenbart eine Spreizvorrichtung für Wäschestücke, bestehend aus einem ersten Gurtförderer zum Auflegen der Wäsche und einem zusätzlichen Gurtförderer ohne eigenen Antrieb, der die flachen Wäschestücke, die auf dem ersten Gurtförderer liegen, spannen soll.

Ausgehend vom Vorstehenden liegt der Erfindung die Aufgabe zugrunde, eine Vorrichtung zum Zuführen von Wäschestücken zu einer Wäschebehandlungseinrichtung zu schaffen, die eine verbesserte Zufuhrleistung ohne Qualitätsbeeinträchtigungen bei der nachfolgenden Behandlung, insbesondere beim Mangeln, der Wäschestücke ermöglicht.

Eine Vorrichtung zur Lösung der Aufgabe weist die Merkmale des Anspruchs 1 auf. Demnach verfügt jeder Gurtförderer eines jeweiligen übereinander angeordneten Paars von Gurtförderern, über einen eigenen Antrieb. So ist einer der Gurtförderer des jeweiligen Paars übereinanderliegend angeordneter Gurtförderer wenigstens zeitweise mit größerer Geschwindigkeit antreibbar.

Es ist mindestens demjenigen Gurtförderer, der wenigstens zeitweise mit größerer Geschwindigkeit als der andere Gurtförderer angetrieben wird, ein Antrieb mit veränderlicher Geschwindigkeit zugeordnet. Dann kann dieser Gurtförderer zeitweise mit größerer Geschwindigkeit angetrieben werden, während er die übrige Zeit mit der gleichen Geschwindigkeit des ihm zugeordneten Gurtförderers des jeweiligen Paars übereinanderliegender Gurtförderer angetrieben wird.

Dadurch wird aufgrund des schnellen Antriebs eines Gurtförderers des Paars übereinanderliegender Gurtförderer auf das Wäschestück ein Schlupf ausgeübt, der das sich im Bereich des Streckförderers befindliche Wäschestück in Zuführrichtung des Wäschestücks zur nachfolgenden Wäschebehandlungseinrichtung ausstreckt und/oder eine eventuell umgeschlagene vordere Querkante des Wäsche-stücks ausstreift, insbesondere in Zuführrichtung nach vorn klappt.

Es ist vorgesehen, die Gurte des jeweiligen Paars übereinanderliegender Gurtförderer so auszubilden, dass der Schlupf zwischen dem mindestens temporär bzw. momentan etwas schneller angetriebenen Gurtförderer und dem Wäschestück zustande kommt. Hierdurch wird sichergestellt, dass das jeweilige Wäschestück gezielt in Zuführrichtung gestreckt wird und ein eventuell umgeklappter vorderer Querrand des Wäschestücks auch in Zuführrichtung wieder zurückgeklappt wird.

Es ist aber auch denkbar, bei ständig mit unterschiedlichen Geschwindigkeiten angetriebenen übereinanderliegenden Gurtförderern durch einen geschwindigkeitsveränderlichen Antrieb einen Gurtförderer mit zeitweise oder periodisch wechselnden Geschwindigkeiten anzutreiben, die stets etwas größer sind als die Geschwindigkeit des anderen Gurtförderers des jeweiligen Paars übereinanderliegender Gurtförderer. Das ermöglicht ein individuelles Ausstrecken eines jeweiligen Wäschestücks im Bereich der Streckeinrichtung.

Es ist denkbar, die Geschwindigkeitsveränderung des betreffenden Gurtförderers stufenlos und/oder gestuft vorzunehmen, um das gewünschte Geschwindigkeitsprofil herbeizuführen. Insbesondere eine stufenweise Geschwindigkeitsänderung kann zu einem Impuls führen, der das Wäschestück in der Streckeinrichtung wirkungsvoller ausstreckt.

Gemäß einer vorteilhaften Weiterbildung der Vorrichtung ist es vorgesehen, zwischen den übereinander angeordneten Gurtförderern der Streckeinrichtung einen Streckspalt vorzusehen. Bei Streckeneinrichtungen mit mehreren aufeinanderfolgenden Paaren übereinanderliegender Gurtförderer ist ein solcher Streckspalt bevorzugt zwischen jedem Paar übereinanderliegender Gurtförderer vorgesehen. Durch den jeweiligen Streckspalt ist das Wäschestück hindurchtransportierbar.

Bevorzugt ist es vorgesehen, dass sich der Streckspalt insbesondere kontinuierlich verringert. Da entsteht ein keilartiger Streckspalt zwischen dem jeweiligen Paar übereinanderliegender Gurtförderer, der sich vorzugsweise in Zuführrichtung kontinuierlich verringert. Durch einen solchen Streckspalt üben die paarweise übereinander angeordneten Gurtförderer in Zuführrichtung gesehen einen zunehmenden Druck auf beide Seiten des durch den Streckspalt hindurchlaufenden Wäschestücks aus. Der Reibschluss der Gurtförderer zum Wäschestück nimmt dadurch in Zuführrichtung vorzugsweise kontinuierlich zu. Das führt in Phasen des schnelleren Antriebs eines Gurtförderers zu einem in Zuführrichtung zunehmenden Schlupf zwischen mindestens einem Gurtförderer und dem durch den Streckspalt hindurchgeförderten Wäschestück.

Eine andere vorteilhafte Weiterbildungsmöglichkeit der Vorrichtung sieht es vor, dass Gurte der paarweise übereinanderliegenden Gurtförderer des jeweiligen Gurtförderpaars mit dem jeweiligen Wäschestück in Kontakt kommende Oberflächen aufweisen, die derart unterschiedlich sind, dass sie verschieden große Reib- und/oder Mitnahmekräfte auf gegenüberliegende Seiten des Wäschestücks zwischen den übereinanderliegenden Gurtförderern ausüben. Dadurch wird gewährleistet, dass das jeweilige Wäschestück vom mit gleichbleibender Grund- und Zuführgeschwindigkeit angetriebenen Gurtförderer reibschlüssig und ohne nennenswerten Schlupf oder nur geringen Schlupf mitgenommen werden kann, während zwischen dem mindestens zeitweise schneller angetriebenen gegenüberliegenden Gurtförderer und dem Wäschestück ein Schlupf, insbesondere ein größerer Schlupf, entstehen kann, solange dieser Gurtförderer schneller angetrieben ist als der ihm zugeordnete gegenüberliegende Gurtförderer. Dadurch wird von diesem Gurtförderer das Wäschestück mit gleich bleibender Geschwindigkeit, nämlich der Zuführgeschwindigkeit, durch den Streckspalt der Streckeinrichtung transportiert.

Des Weiteren ist es bevorzugt vorgesehen, einen Gurtförderer des mindestens einen Paars übereinanderliegender Gurtförderer der Streckeinrichtung, insbesondere einen unteren Gurtförderer, mit gleichbleibender Geschwindigkeit anzutreiben. Die Geschwindigkeit dieses Gurtförderers ändert sich auch dann nicht, wenn der ihm zugeordnete Gurtförderer schneller oder zumindest momentan schneller angetrieben wird. Dadurch wird die Grundgeschwindigkeit des Wäschestücks beim Ausstreifen und/oder Ausstrecken desselben dauerhaft unverändert beibehalten.

Der zweite Gurtförderer des jeweiligen Paars übereinanderliegender Gurtförderer der Streckeinrichtung, bei dem es sich bevorzugt um einen oberen Gurtförderer der Streckeinrichtung handelt, wird bei einer bevorzugten Ausgestaltungsmöglichkeit des Verfahrens kontinuierlich oder nur zeitweise mit einer größeren Geschwindigkeit angetrieben. Das geschieht bevorzugt, während sich wenigstens ein vorderer Abschnitt des jeweiligen Wäschestücks zwischen dem Paar übereinanderliegender Gurtförderer befindet. Dann wird dieser sich zwischen dem Paar übereinanderliegender Gurtförderer befindende Teil des Wäschestücks durch den einen schneller angetriebenen Gurtförderer des Paars übereinander angeordneter Gurtförderer in Zuführrichtung ausgestreckt. Es kann reichen, wenn der zeitweise raschere Antrieb des einen Gurtförderers des jeweiligen Paars übereinanderliegender Gurtförderer nur kurzfristig erfolgt und der zwischen den Gurtförderern liegende Teil des Wäschestücks dann ruckartig gestreckt wird. Das reicht insbesondere, um eine eventuell zurückgeschlagene vordere Querkante des Wäschestücks in Zuführrichtung zurückzuklappen bzw. auszustrecken.

Denkbar wäre es aber auch, dass ein Gurtförderer, insbesondere ein oberer Gurtförderer, des jeweiligen Paars übereinanderliegender Gurtförderer der Streckeinrichtung ständig schneller angetrieben wird als der benachbarte Gurtförderer. Dann kann es ausreichen, dass die Differenzgeschwindigkeit zwischen den benachbarten, übereinanderliegenden Gurtförderern verhältnismäßig gering ist, weil während des gesamten Durchlaufs des jeweiligen Wäschestücks durch die Streckeinrichtung ein ständiges Strecken des Wäschestücks in Zuführrichtung erfolgt.

Bei allen vorstehend beschriebenen Ausgestaltungsmöglichkeiten wird die Zuführleistung von Wäschestücken zur Wäschebehandlungseinrichtung durch das Strecken des jeweiligen Wäschestücks nicht beeinträchtigt, weil zum Ausstrecken des Wäschestücks die Zuführgeschwindigkeit nicht reduziert wird, indem ein Gurtförderer des Paars übereinanderliegender Gurtförderer kurzzeitig abgebremst wird, sondern erfindungsgemäß beide Gurtförderer ununterbrochen angetrieben werden, und zwar ein Gurtförderer mit konstanter Geschwindigkeit angetrieben wird und der andere Gurtförderer des Paars übereinanderliegender Gurtförderer wenigstens temporär schneller angetrieben wird.

Die Geschwindigkeit des mindestens zeitweise schneller angetriebenen anderen Gurtförderers des jeweiligen Paars übereinanderliegender Gurtförderer kann 1% bis 30%, vorzugsweise 1% bis 20%, über derjenigen des mit gleichbleibender Geschwindigkeit, insbesondere der Zuführgeschwindigkeit, angetriebenen Gurtförderers liegen. Die Geschwindigkeitsdifferenz ist bei permanent schneller angetriebenen anderen Gurtförderern geringer als bei nur kurzzeitig schnell angetriebenen anderen Gurtförderern. Je kürzer die Zeitspanne des schnelleren Antriebs des anderen Gurtförderers ist, umso größer ist die Geschwindigkeitsdifferenz zwischen dem mindestens einen Paar übereinanderliegender Gurtförderer der Streckeinrichtung.

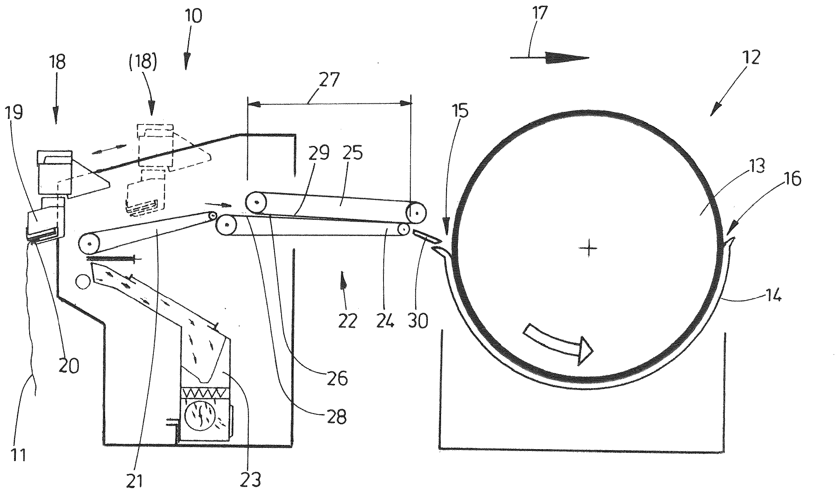

Ein bevorzugtes Ausführungsbeispiel der Erfindung wird nachfolgend anhand der einzigen Figur der Zeichnung näher erläutert:
Die einzige Figur der Zeichnung zeigt schematisch die erfindungsgemäß ausgebildete Vorrichtung und verdeutlicht beispielhaft das damit durchführbare erfindungsgemäße Verfahren.

Die hier gezeigte Vorrichtung ist als eine Eingabemaschine 10 ausgebildet. Die Eingabemaschine 10 dient dazu, Wäschestücke 11 einzeln und nacheinander einer Wäschebehandlungseinrichtung zuzuführen. In der Figur ist als Wäschebehandlungseinrichtung eine Mangel 12 dargestellt. Hierbei handelt es sich um eine Muldenmangel mit einer drehend antreibbaren beheizten Mangelwalze 13 und eine der unteren Hälfte der Mangelwalze 13 zugeordnete feststehende Mangelmulde 14. Die Mangelmulde 14 ist beheizbar und kann flexibel ausgebildet sein. Die Mangel 12 verfügt über einen zur Eingabemaschine 10 gerichteten Einlaufbereich 15 und einen dem Einlaufbereich 15 gegenüberliegenden Auslaufbereich 16.

Ein jeweiliges Wäschestück 11 wird von der Eingabemaschine 10 in Zuführrichtung 17 dem Einlaufbereich 15 der Mangel 12 zugeführt, von der drehend angetriebenen Mangelwalze zwischen derselben und der Mangelmulde 14 durch die Mangel 12 transportiert und dabei gemangelt, nämlich endgetrocknet und geglättet. Am Auslaufbereich 16 verlässt das jeweils gemangelte Wäschestück 11 die Mangel 12.

Die Erfindung ist nicht auf die hier gezeigte Mangel 12 beschränkt. Beispielsweise kann die Muldenmangel mehrere aufeinanderfolgende Mangelwalzen 13 mit jeweils einer ihr zugeordneten Mangelmulde 14 aufweisen. Es ist auch denkbar, hinter der Eingabemaschine 10 Mangeln 12 anderer Art anzuordnen, beispielsweise Bändermangeln.

Die hier gezeigte Eingabemaschine 10 verfügt an ihrer Vorderseite über eine Spreizeinrichtung 18 mit mindestens einem Paar, vorzugsweise gleicher, Spreizklammern 19. In der Figur ist nur eine Spreizklammer 19 gezeigt, und zwar in ihrer Ausgangsstellung und (gestrichelt) in einer davon in Zuführrichtung 17 versetzten Übergabestellung.

Bei der gezeigten Spreizeinrichtung 18 werden benachbarte Ecken eines quer zur Zuführrichtung 17 verlaufenden vorderen Querrands 20 des Wäschestücks 10 manuell in das einzige oder jeweilige Paar Spreizklammern 19 eingehängt. Danach werden die Spreizklammern 19 quer zur Zuführrichtung 17 auseinandergefahren zum Ausbreiten des Wäschestücks 11 und Strecken des vorderen Querrands 20 desselben, damit dieser mit einem möglichst geringen Restdurchhang nahezu geradlinig ausgestreckt wird. Nach dem Auseinanderfahren der Spreizklammern 19 wird das von den Spreizklammern 19 ausgebreitet gehaltene Wäschestück 10 durch Vorfahren der Spreizeinrichtung 18 in Zuführrichtung 17 (hier in die gestrichelt gezeigte Stellung) mit dem gestreckten vorderen Querrand 20 und einem sich daran anschließenden Bereich des Wäschestücks 11 auf einem Zuführförderer 21 abgelegt. Dabei wird ein rückwärtiger Abschnitt des Wäschestücks 11 vor dem Zuführförderer 11 durch Unterdruck in einen Saugschacht 23 eingesaugt, wodurch dieser Teil des Wäschestücks 11 auch ausgestreckt wird und somit im Wesentlichen faltenfrei vor dem Zuführförderer 21 herunterhängt. Vom Zuführförderer 21 wird dann das Wäschestück 11 in Zuführrichtung 17 zu einer darauffolgenden Streckeinrichtung 22 transportiert.

Die Erfindung eignet sich auch für andere Arten von Eingabemaschinen, beispielsweise solche, bei denen die Ecken des vorderen Querrands 20 des jeweiligen Wäschestücks 11 automatisch an die Spreizklammern 19 der Spreizeinrichtung 18 übergeben und in diese eingehängt werden. Die Erfindung eignet sich aber auch für Eingabemaschinen, die über keine Spreizeinrichtung 18 verfügen. Bei solchen Eingabemaschinen für insbesondere kleinere Wäschestücke, beispielsweise Servietten, Kopfkissenbezüge, Handtücher oder dergleichen, werden die kleinen Wäschestücke manuell ausgebreitet und/oder ausgestreckt und mindestens mit einem vorderen Querrandbereich auch manuell auf den Anfang des Zuführförderers 21 aufgelegt.

Die hier gezeigte Streckeinrichtung 22 verfügt über ein Paar übereinanderliegender und vorzugzugsweise prinzipiell gleich ausgebildeter Gurtförderer, und zwar einen unteren Gurtförderer 24 und einen oberen Gurtförderer 25. Die Streckeinrichtung 22 kann aber auch von mehreren aufeinanderfolgenden Paaren jeweils zweier übereinander angeordneter Gurtförderer 24 und 25 gebildet sein.

Die Gurtförderer 24 und 25 sind so übereinander angeordnet, dass sich zwischen beiden ein Streckspalt 26 befindet. Der Streckspalt 26 kann über die gesamte Überlappungslänge 27 der beiden Gurtförderer 24 und 25 gleich breit sein, indem zueindergerichtete Trume 28, 29 der übereinanderliegenden Gurtförderer 24, 25 mit geringem Abstand parallel zueinander verlaufen oder - wenn sich kein Wäschestück 11 zwischen den Gurtförderern 24, 25 befindet - aneinander anliegen. Im gezeigten Ausführungsbeispiel ist es jedoch vorgesehen, dass der Streckspalt 26 leicht keilförmig ausgebildet ist, in dem er in Zuführrichtung 17 sich kontinuierlich verringert, nämlich schmaler wird.

Bei der in der Figur dargestellten Vorrichtung ist der obere Gurtförderer 25 etwas kürzer als der untere Gurtförderer 24 ausgebildet und gegenüber dem unteren Gurtförderer 24 in Zuführrichtung 17 versetzt. Dadurch ist ein Anfang des unteren Gurtförderers 24 vom oberen Gurtförderer 25 freigelassen und es erstreckt sich ein Ende des oberen Gurtförderers 25 über das Ende des unteren Gurtförderers 24 hinweg. Hierauf ist die Erfindung aber nicht beschränkt. Die Gurtförderer 24 und 25 können in einer von der Darstellung in der Figur abweichenden Weise ausgebildet und übereinander angeordnet sein, insbesondere ohne Versatz zueinander und/oder gleiche Längen aufweisen.

Jeder der prinzipiell gleich ausgebildeten Gurtförderer 24 und 25 verfügt über einen zwischen zwei gegenüberliegenden Umlenktrommeln umlaufend antreibbaren Fördergurt. Zueinander gerichtete Trume 28 und 29 der Fördergurte der übereinander angeordneten Gurtförderer 24 und 25 begrenzen beidseitig den Streckspalt 26.

Eine Umlenktrommel jedes Gurtförderers 24 und 25 der Streckeinrichtung 22 ist antreibbar. Dazu kann jeder angetriebenen Umlenktrommel sowohl des unteren Gurtförderers 24 als auch des oberen Gurtförderers 25 ein eigener in der Figur nicht gezeigter Antrieb zugeordnet sein. Im Folgenden wird davon ausgegangen, dass der obere Gurtförderer 25 dauerhaft oder zumindest zeitweise schneller antreibbar ist als der untere Gurtförderer 24. Dann ist der Antrieb des oberen Gurtförderers 25 entweder so ausgebildet, dass er seinen Gurt schneller antreibt als der Antrieb des unteren Gurtförderers 24. Bei dauerhaft mit konstanter Geschwindigkeit schneller angetriebenem oberen Gurtförderer 25 braucht der Antrieb des oberen Gurtförderers 25 nicht verstellbar zu sein. Ebenso ist bevorzugt der Antrieb des Gurts des unteren Gurtförderers 24 nicht verstellbar, wenn der untere Gurtförderer 24 stets mit der gleichen Geschwindigkeit angetrieben wird.

Wenn der obere Gurtförderer 25 nur zeitweise mit einer höheren Geschwindigkeit gegenüber dem unteren Gurtförderer 24 antreibbar sein soll, ist der Antrieb des Gurts des oberen Gurtförderers 25 zweckmäßigerweise als ein Verstellantrieb ausgebildet, der es zulässt, die Geschwindigkeit zum Antrieb des Gurts des oberen Gurtförderers 25 stufenlos oder gegebenenfalls auch stufenweise zu verändern.

Denkbar ist es auch, dass insbesondere dann, wenn der obere Gurtförderer 25 ständig mit einer geringfügig größeren Geschwindigkeit angetrieben wird, als der ebenso mit konstanter, aber geringerer, Geschwindigkeit angetriebene untere Gurtförderer 24, die jeweiligen angetriebenen Umlenktrommeln sowohl des unteren Gurtförderers 24 als auch des oberen Gurtförderers 25 von einem gemeinsamen Antrieb angetrieben werden. Dieser gemeinsame Antrieb, insbesondere Motor, weist dann eine vorzugsweise getriebliche Antriebsverbindung zur angetriebenen Umlenktrommel sowohl des unteren Gurtförderers 24 als auch des oberen Gurtförderers 25 auf. Jedoch verfügt die Antriebsverbindung zu wenigstens einem der Gurtförderer 24, 25 über eine Übersetzung oder Untersetzung, die dazu führt, dass der Gurt des oberen Gurtförderers 25 schneller umläuft als der Gurt des unteren Gurtförderers 24.

Die Gurte beider Gurtförderer 24 und 25 sind so ausgebildet, insbesondere ihre mit der jeweiligen Seite des Wäschestücks 10 in Kontakt kommenden Oberflächen, dass das jeweilige Wäschestück 11 vom damit in Kontakt kommenden Trum 28 des unteren Gurtförderers 24 zuverlässig mitgenommen wird, aber mindestens während der Phase des schnelleren Antriebs des oberen Gurtförderers 25 ein Schlupf zwischen mindestens dem das Wäschestück 11 kontaktierenden Trum 29 des oberen Gurtförderers 25 und dem Wäschestück 11 möglich ist.

In der Figur ist im Übergangsbereich vom zur Mangel 12 weisenden Ende der Streckeinrichtung 22, insbesondere des unteren Gurtförderers 25 derselben, und dem Einlaufbereich 15 der Mangel 12 ein Überleitmittel 30 angedeutet. Hierbei kann es sich im einfachsten Fall um eine sich an den Streckspalt 26 anschließende und bis zum Anfang des Einlaufbereichs 15 sich erstreckende Führung handeln, die beispielsweise als ein glattes Blech ausgebildet ist, aber auch ein Gurtförderer sein kann.

Die Länge der Streckeinrichtung 22, insbesondere die Überlappungslänge 27 der übereinander angeordneten Gurtförderer 24 und 25 ist bei der hier gezeigten Vorrichtung so gewählt, dass zumindest größere Wäschestücke 11 nicht vollständig in die Streckeinrichtung 22 passen, so dass sich in Zuführrichtung 17 gesehen stets nur ein Teil des betreffenden (großen) Wäschestücks 11 zwischen den Gurtförderer 24, 25 befindet. Das dient der Verringerung der Baulänge der Eingabemaschine 11. Erforderlichenfalls kann die Streckeinrichtung 22 so lang ausgebildet sein, dass auch größere Wäschestücke vollständig in derselben unterbringbar sind. Dann kann es sich auch anbieten, die Streckeinrichtung 22 aus mehreren aufeinanderfolgenden Paaren übereinanderliegender Gurtförderer 24, 25 zu bilden. In diesem Fall ist es denkbar, wenigstens einen Gurtförderer 24, 25 des in Zuführrichtung 17 gesehen letzten Paars übereinander angeordneter Gurtförderer 24, 25 wenigstens zeitweise schneller laufen zu lassen als die davorliegenden Gurtförderer 24, 25.

Nachfolgend wird das erfindungsgemäße Verfahren unter Bezugnahme auf die zuvor beschriebene Vorrichtung näher erläutert:
Ein jeweiliges von der Spreizeinrichtung 18 ausgebreitetes, vorzugsweise ausgestrecktes, Wäschestück 11 wird von der Spreizeinrichtung 18 auf den Anfang des Zuförderers 21 abgelegt und von diesem zur Streckeinrichtung 22 transportiert. Die Spreizeinrichtung 18 spreizt oder streckt den in Zuführrichtung 17 voraneilenden und quer zur Zuführrichtung verlaufenden vorderen Querrand 20 des Wäschestücks 11 so weit, dass er annähernd geradlinig quer zur Zuführrichtung 17 verläuft.

Vom Zuführförderer 21 gelangt das Wäschestück 11 mit dem ausgebreiteten und/oder gestreckten vorderen Querrand 20 voraus in die Streckeinrichtung 22, und zwar in den Anfang des Streckspalts 26 zwischen den übereinander angeordneten Gurtförderern 24 und 25 der Streckeinrichtung 22.

Für die nachfolgende Beschreibung des Verfahrens wird davon ausgegangen, dass mindestens zeitweise und/oder periodisch der obere Gurtförderer 25 schneller als der untere Gurtförderer 24 angetrieben wird. Der untere Gurtförderer 24 der Streckeinrichtung 22 wird mit konstanter Geschwindigkeit, die vorzugsweise der Zuführgeschwindigkeit entspricht, angetrieben. Diese Geschwindigkeit kann derjenigen des Zuführförderers 21 entsprechen, der auch stets mit der gleichen Geschwindigkeit angetrieben wird. Es wäre aber auch möglich, umgekehrt den unteren Gurtförderer 24 mindestens zeitweise schneller als den oberen Gurtförderer 25 anzutreiben.

Bevorzugt ist es vorgesehen, dass der untere Gurtförderer 24 mit einer solchen gleichbleibenden Geschwindigkeit angetrieben wird, die etwas größer ist als die Geschwindigkeit, mit der der Zuführförderer 21 das jeweilige Wäschestück 11 in Zuführrichtung 17 zur Streckeinrichtung 22 transportiert.

Hinsichtlich des Antriebs des oberen Gurtförderers 25 sind mehrere Alternativen denkbar, damit dieser wenigstens zeitweise schneller läuft als der untere Gurtförderer 24.

In einem Fall wird der obere Gurtförderer 25 ständig mit konstanter Geschwindigkeit angetrieben, die aber höher ist als die ebenfalls konstante Geschwindigkeit des unteren Gurtförderers 24. Dann braucht die Geschwindigkeitsdifferenz zwischen dem unteren Gurtförderer 24 und dem ständig schneller angetriebenen oberen Gurtförderer 25 nur verhältnismäßig gering zu sein. Es reicht dann, wenn der obere Gurtförderer 25 nur mit einer um 0,5% bis 10%, insbesondere 1% bis 5%, höheren Geschwindigkeit angetrieben wird als der untere Gurtförderer 24.

In einem anderen Fall wird der obere Gurtförderer 25 nur zeitweise und/oder periodisch schneller angetrieben als der untere Gurtförderer 24. Sofern kein schnellerer Antrieb des oberen Gurtförderers 25 erfolgt, werden die beiden übereinanderliegenden Gurtförderer 24 und 25 der Streckeinrichtung 22 mit gleicher Geschwindigkeit angetrieben.

Es ist auch denkbar, dass der obere Gurtförderer 25 ständig schneller als der untere Gurtförderer 24 angetrieben wird, aber die Geschwindigkeitsdifferenz zwischen den Gurtförderern 24 und 25 veränderbar ist, indem periodisch und/oder abwechselnd der obere Gurtförderer 25 nur wenig schneller oder deutlich schneller angetrieben wird. Beispielsweise kann der deutlich schnellere Antrieb des oberen Gurtförderers 25 das 1,2-bis 3-fache der nur wenig größeren Geschwindigkeit des oberen Gurtförderers 25 betragen.

Die wie vorstehend beschrieben herbeigeführten mindestens zeitweise größeren Geschwindigkeiten des oberen Gurtförderers 25 gegenüber dem unteren Gurtförderer 24 führen im Bereich der Überlappungslänge 27 der übereinanderliegenden Gurtförderer 24 und 25 der Streckeinrichtung 22 zu einer Streckung des ganzen Wäschestücks 11 oder nur des sich zwischen den Gurtförderern 24 und 25 befindenden Teils des Wäschestücks 11. Diese Streckung erfolgt in Zuführrichtung 17. Dabei kommt es zumindest in Phasen, in denen der obere Gurtförderer 25 schneller angetrieben wird als der untere Gurtförderer 24 zu einer Geschwindigkeitsdifferenz zwischen den Gurtförderern 24, 25. Dadurch wird von mindestens einem der Trume 28, 29 der Gurtförderer 24, 25 eine durch Reibschluss zwischen dem Wäschestück 11 und dem jeweiligen Trum 28, 29 erzeugte Kraft auf das Wäschestück 11 ausgeübt. Das Wäschestück 11 wird dadurch in Zuführrichtung 17 gezogen und/oder gestreckt. Hierbei wird insbesondere ein eventuell gegen die Zuführrichtung 17 zurückgeschlagener vorderer Querrand 20 wieder in Zuführrichtung 17 ausgeklappt, nämlich ausgestreift. Außerdem können durch den periodisch schneller angetriebenen oberen Gurtförderer 25, insbesondere einem dadurch hervorgerufenen Schlupf zwischen seinem Trum 29 und der daran anliegenden Seite des Wäschestücks 11, auch eventuelle Unregelmäßigkeiten, Falten oder Knicke, die das Wäschestück 11 zwischen den Gurtförderern 24 und 25 noch aufweist, von der Streckeinrichtung 22 beseitigt werden.

Nachdem das Wäschestück 11 von der Streckeinrichtung 22 so weit ausgestreckt worden ist, dass ein eventuell zurückgeschlagener vorderer Querrand 20 mit einem schmalen, sich daran anschließenden Bereich ausgestreift worden ist und auch im Übrigen das Wäschestück 11 in der Streckeinrichtung 22 derart gestreckt worden ist, dass eventuelle Falten oder Knicke in Zuführrichtung 17 wenigstens größtenteils beseitigt worden sind, wird das Wäschestück 11 von der Streckeinrichtung 22 auf und über das Überleitmittel 30 geschoben, so dass das Wäschestück 11 mit seinem voraneilenden ausgestreiften vorderen Querrand 20 in den Einlaufbereich 15 der Mangel 12 einlaufen kann.

### Bezugszeichenliste:

- 10: Eingabemaschine
- 11: Wäschestück
- 12: Mangel
- 13: Mangelwalze
- 14: Mangelmulde
- 15: Einlaufbereich
- 16: Auslaufbereich
- 17: Zuführrichtung
- 18: Spreizeinrichtung
- 19: Spreizklammer
- 20: vorderer Querrand
- 21: Zuführförderer
- 22: Streckeinrichtung
- 23: Saugschacht
- 24: unterer Gurtförderer
- 25: oberer Gurtförderer
- 26: Streckspalt
- 27: Überlappungslänge
- 28: Trum
- 29: Trum
- 30: Überleitmittel

## Patentansprüche

1. Vorrichtung zum Zuführen von Wäschestücken (11) zu einer Wäschebehandlungseinrichtung, vorzugsweise einer Mangel (12), mit einem Zuführförderer (21) zum Transport eines Wäschestücks (11) in Zuführrichtung (17), und mit einer dem Zuführförderer (21) nachgeordneten Streckeinrichtung (22) mit mindestens einem Paar übereinander angeordneter Gurtförderer (24, 25), von denen jeder einen eigenen Antrieb aufweist, derart, dass mindestens zeitweise ein Gurtförderer (25) schneller antreibbar ist als der andere Gurtförderer (24), **dadurch gekennzeichnet, dass** der Antrieb zum mindestens zeitweise schnelleren Antrieb des ihm zugeordneten Gurtförderers (25) geschwindigkeitsveränderlich ist.

2. Vorrichtung nach Anspruch 1, **dadurch gekennzeichnet, dass** zwischen den übereinander angeordneten Gurtförderern (24, 25) der Streckeinrichtung (22) ein Streckspalt (26) vorgesehen ist, durch den das jeweilige Wäschestück (11) hindurchtransportierbar ist, vorzugsweise der Streckspalt (26) in Zuführrichtung (17) sich insbesondere kontinuierlich verringert, derart, dass die paarweise übereinander angeordneten Gurtförderer (24, 25) in Zuführrichtung (17) einen zunehmenden Druck auf beide Seiten des Wäschestück (11) ausüben.

3. Vorrichtung nach Anspruch 1 oder 2, **dadurch gekennzeichnet, dass** Gurte der paarweise übereinanderliegenden Gurtförderer (24, 25) mit dem jeweiligen Wäschestück (11) in Kontakt kommende Oberflächen aufweisen, die derart unterschiedlich sind, dass sie unterschiedliche Reibkräfte auf gegenüberliegenden Seiten des jeweils sich im Streckspalt (26) befindenden Wäschestücks (11) oder Teile desselben ausüben.

4. Vorrichtung nach Anspruch 1, **dadurch gekennzeichnet, dass** derjenige Gurtförderer (24) der Streckeinrichtung (22), insbesondere ein unterer Gurtförderer (24), der mit gleichbleibender Geschwindigkeit antreibbar ist, mit einer solchen Geschwindigkeit antreibbar ist, die der Zuführgeschwindigkeit des Wäschestücks (11) zur Wäschebehandlungseinrichtung entspricht.

5. Vorrichtung nach Anspruch 4, **dadurch gekennzeichnet, dass** die Geschwindigkeit des mindestens zeitweise schnelleren Antriebs des vorzugsweise oberen Gurtförderers (25) 0,5% bis 30%, vorzugsweise 1% bis 10%, über derjenigen des mit gleichbleibender Geschwindigkeit angetriebenen Gurtförderers (24) liegt.

6. Vorrichtung nach Anspruch 1, **dadurch gekennzeichnet, dass** die übereinander angeordneten Gurtförderer (24, 25) der Streckeinrichtung (22) ständig mit unterschiedlichen Geschwindigkeiten antreibbar sind, wobei vorzugsweise der obere Gurtförderer (25) ständig mit größerer Geschwindigkeit antreibbar ist als der untere Gurtförderer (24).

## Claims

1. A device for feeding laundry pieces (11) to a laundry treatment installation, preferably an ironer (12), having an infeed conveyor (21) for transporting a laundry piece (11) in the feeding direction (17), and having a stretching installation (22) which is disposed downstream of the infeed conveyor (21) and has at least one pair of belt conveyors (24, 25) that are disposed on top of one another, each of which has a dedicated drive such that one belt conveyor (25) is able to be at least temporarily driven faster than the other belt conveyor (24), **characterized in that** that the drive for at least temporarily driving the belt conveyor (25) assigned to it faster is variable in terms of speed.

2. The device as claimed in claim 1, **characterized in that** a stretching gap (26) through which the respective laundry piece (11) is able to be transported is provided between the belt conveyors (24, 25) of the stretching installation (22) that are disposed on top of one another, preferably that the stretching gap (26) in the feeding direction (17) in particular continuously diminishes in such a manner that the belt conveyors (24, 25) that are disposed on top of one another in pairs exert an increasing pressure on both sides of the laundry piece (11) in the feeding direction (17).

3. The device as claimed in claim 1 or 2, **characterized in that** belts of the belt conveyors (24, 25) that lie on top of one another in pairs have surfaces which come into contact with the respective laundry piece (11) and are dissimilar in such a manner that said surfaces exert dissimilar friction forces on opposite sides of the respective laundry piece (11) or parts thereof situated in the stretching gap (26) .

4. The device as claimed in claim 1, **characterized in that** that belt conveyor (24) of the stretching installation (22), in particular a lower belt conveyor (24), which is drivable at a constant speed, can be driven at such a speed which corresponds to the infeed speed of the laundry item (11) to the laundry treatment installation.

5. The device as claimed in claim 4, **characterized in that** the speed of the at least temporarily faster drive of the preferably upper belt conveyor (25) is 0.5% to 30%, preferably 1% to 10%, above that of the belt conveyor (24) driven at constant speed.

6. The device as claimed in claim 1, **characterized in that** the belt conveyors (24, 25) of the stretching device (22), which are arranged one above the other, can be driven permanently at dissimilar speeds, wherein preferably the upper belt conveyor (25) can be driven permanently at a higher speed than the lower belt conveyor (24).

## Revendications

1. Dispositif permettant d'amener des pièces de linge (11) à un appareil de traitement du linge, de préférence à une calandre à linge (12), comprenant un convoyeur d'amenée (21) pour transporter une pièce de linge (11) dans la direction d'amenée (17), et un appareil d'étirage (22) placé en aval du convoyeur d'amenée (21) et muni d'au moins une paire de convoyeurs à courroie (24, 25) disposés l'un au-dessus de l'autre et dont chacun présente son propre dispositif d'entraînement, de telle sorte qu'au moins temporairement un convoyeur à courroie (25) peut être entraîné plus vite que l'autre convoyeur à courroie (24),
**caractérisé en ce que** le dispositif d'entraînement pour l'entraînement au moins temporairement plus vite du convoyeur à courroie (25) qui lui est associé est variable en vitesse.

2. Dispositif selon la revendication 1, **caractérisé en ce qu'**entre les convoyeurs à courroie (24, 25) disposés l'un au-dessus de l'autre de l'appareil d'étirage (22) est prévu une fente d'étirage (26) à travers laquelle la pièce de linge (11) respective peut être transportée, la fente d'étirage (26) diminuant de préférence dans la direction d'amenée (17), en particulier en continu, de telle sorte que les convoyeurs à courroie (24, 25) disposés les uns au-dessus des autres par paires, exercent dans la direction d'amenée (17) une pression croissante sur les deux côtés de la pièce de linge (11).

3. Dispositif selon la revendication 1 ou 2, **caractérisé en ce que** les courroies des convoyeurs à courroie (24, 25) superposés par paires présentent des surfaces entrant en contact avec la pièce de linge (11) respective qui sont différentes **en ce qu'**elles exercent différentes forces de friction sur des côtés opposés de la pièce de linge (11), ou des parties de celle-ci, se trouvant respectivement dans la fente d'étirage (26).

4. Dispositif selon la revendication 1, **caractérisé en ce que** le convoyeur à courroie (24) de l'appareil d'étirage (22), en particulier un convoyeur à courroie inférieur (24), qui peut être entraîné à vitesse constante peut être entraîné à une vitesse qui correspond à la vitesse d'amenée de la pièce de linge (11) à l'appareil de traitement du linge.

5. Dispositif selon la revendication 4, **caractérisé en ce que** la vitesse de l'entraînement au moins temporairement plus rapide du convoyeur à courroie (25), de préférence supérieur, est de 0,5 % à 30 %, de préférence de 1 % à 10 %, supérieure à celle du convoyeur à courroie (24) entraîné à vitesse constante.

6. Dispositif selon la revendication 1, **caractérisé en ce que** les convoyeurs à courroie (24, 25) de l'appareil d'étirage (22) disposés les uns au-dessus des autres, peuvent être entraînés constamment à des vitesses différentes, dans lequel de préférence le convoyeur à courroie supérieur (25) peut être entraîné constamment à une vitesse supérieure à celle du convoyeur à courroie inférieur (24).
